Europäisches Patentamt

European Patent Office

Office européen des brevets

(19)

(11) Numéro de publication: **0 082 834**
**B1**

(12) ## FASCICULE DE BREVET EUROPEEN

(45) Date de publication du fascicule du brevet:
**12.03.86**

(51) Int. Cl.⁴: **A 47 J 36/28,** C 09 K 5/00

(21) Numéro de dépôt: **82870077.3**

(22) Date de dépôt: **17.12.82**

(54) Dispositif permettant de chauffer un aliment contenu dans une boîte de conserve.

(30) Priorité: **18.12.81 LU 83844**

(43) Date de publication de la demande:
**29.06.83 Bulletin 83/26**

(45) Mention de la délivrance du brevet:
**12.03.86 Bulletin 86/11**

(84) Etats contractants désignés:
**BE CH DE FR GB IT LI NL**

(56) Documents cités:
**FR - A - 826 637**
**FR - A - 863 212**
**FR - A - 2 231 342**
**FR - A - 2 481 099**
**US - A - 2 289 007**
**US - A - 2 733 709**
**US - A - 3 003 324**
**US - A - 3 429 672**

**Le dossier contient des informations techniques
présentées postérieurement au dépôt de la demande et
ne figurant pas dans le présent fascicule.**

(73) Titulaire: **TARAHELM LIMITED, 23, Great Castle Street,
London W1N 8NQ (GB)**

(72) Inventeur: **Apellaniz, Ramon, 10, Tienne du Peutky,
B-1338 Lasne (BE)**

(74) Mandataire: **De Brabanter, Maurice et al, Bureau
VANDER HAEGHEN 63 Avenue de la Toison d'Or,
B-1060 Bruxelles (BE)**

ACTORUM AG

# Description

La présente invention est relative à un dispositif permettant de chauffer un aliment contenu dans une boîte de conserve sans apport extérieur de chaleur.

On connaît, par exemple par le FR-A-826.637 un dispositif permettant de chauffer un aliment contenu dans une boîte, comprenant au moins une boîte de conserve entourée d'une enveloppe formant une chambre annulaire contenant de la chaux vive et de l'eau séparées par au moins une paroi pouvant être aisément perforée ou déchirée, pour permettre le contact entre la chaux vive et l'eau. La réaction entre ces deux matériaux est exothermique. La chaleur dégagée par la réaction d'extinction de la chaux vive est transmise par conduction à l'aliment contenu dans la boîte de conserve.

Le système connu du type indiqué ci-dessus présente divers inconvenients et est déféctueux.

La chaux vive est trop réactive vis-à-vis de l'eau et la chaleur dégagée par la réaction d'extinction est libérée rapidement. De ce fait, la transmission de la chaleur de réaction à l'aliment contenu dans la boîte de conserve n'est pas complète, ce qui implique une perte importante de chaleur.

Par ailleurs, la chaux vive qui est un matériau très hygroscopique n'est pas conservée dans une enceinte suffisamment hermétique. De ce fait le contact avec l'humidité de l'air détériore la chaux vive et diminue son pouvoir chauffant.

Au surplus, le mélange entre la chaux vive et l'eau n'est pas homogène, de telle sorte qu'il se produit un échauffement intense en certains endroits. Il s'ensuit un dégagement important de vapeur d'eau, une perte de chaleur et une élévation de la pression pouvant provoquer des explosions. En d'autres endroits, l'eau n'entre pas en contact avec la chaux, en sorte qu'une partie du matériau chauffant reste inutilisée.

Un autre inconvénient des systèmes connus résulte du fait que la chaux hydratée produite par la réaction entre l'eau et la chaux vive est un mauvais conducteur de la chaleur. Il s'ensuit que l'échauffement de l'aliment contenu dans la boîte de conserve est lent et que ces systèmes nécessitent de grandes quantités de chaux vive pour compenser les pertes de chaleur.

Les systèmes antérieurement proposés sont coûteux par le fait que leur mise en œuvre est complexe et qu'ils nécessitent de nombreuses pièces et machines que les fabricants de boîtes ne possèdent pas.

Il s'ensuit que le coût de mise en œuvre de ces systèmes est prohibitif.

La présente invention vise à remédier à ces inconvenients. Elle a pour objet un dispositif du type défini dans le préambule de la revendication 1, ce dispositif étant essentiellement caractérisé en que la chambre annulaire contient de la chaux vive en grains dont la réactivité a été préalablement réduite, ainsi qu'une quantité d'eau supérieure à celle nécessaire pour la réaction d'hydratation de la chaux vive, cette quantité d'eau étant comprise entre environ 0,75 et 3 parties en poids par partie enpoids de chaux vive.

Selon une particularité de l'invention, la chambre annulaire contient de la chaux vive en grains dont la réactivité a été réduite par calcination à une température supérieure à environ 900°C et de préférence, comprise entre environ 1100 et 1400°C selon le degré de réactivité souhaité. Ce traitement thermique permet non seulement de modérer la réactivité de la chaux vive vis-à-vis de l'eau, mais confère également une masse volumique apparente élevée à la chaux vive.

Cec propriétés de la chaux vive sont avantageuses puisqu'elles permettent, d'une part, d'obtenir une réaction d'extinction progressive et, par conséquent, une bonne transmission de la chaleur de réaction par conduction à l'aliment contenu dans la boîte. D'autre part, la valeur élevée de la masse volumique apparente de la chaux permet d'introduire dans la chambre annulaire une plus grande quantité de chaux par unité de volume.

La réactivité de la chaux vive, définie par la température et le temps de calcination de cette chaux, est ajustée en fonction de la nature de l'aliment à chauffer ainsi que du degré et du temps d'échauffement que l'on souhaite obtenir.

Comme on l'a signalé plus haut, la quantité d'eau contenue dans la chambre annulaire entourant la boîte de conserve est comprise entre 0,75 à 3 parties en poids par partie en poids de chaux vive.

Grâce à la quantité d'eau largement excédentaire par rapport à la quantité stoechiométrique nécessaire à l'extinction de la chaux vive, on obtient un mélange d'eau et de chaux suffisamment humide pour obtenir une bonne transmission de la chaleur de réaction à l'aliment contenu dans la boîte de conserve. Par ailleurs, cet excès d'eau permet d'éviter la formation de vapeur d'eau, ce qui constituerait une perte de chaleur.

La chaux vive composé essentiellement d'oxyde de calcium en grains est placée au fond de la chambre annulaire, de manière à ce que la masse d'eau se trouvant au-dessus de la chaux puisse de répartir d'une façon homogène à l'intérieur de la masse de chaux vive avant le commencement de la réaction d'hydratation, lorsque l'eau est libérée par déchirement ou perçage de la paroi de séparation.

L'enveloppe formant la chambre annulaire entourant la boîte de conserve est constituée d'une boîte qui est coaxiale à la boîte de conserve et est ouverte à une extrémité, où l'intervalle entre le bord libre de la boîte ouverte et le bord adjacent de la boîte de conserve est fermé, de manière étanche, par une pièce annulaire de fermeture en un matériau aisément perçable. La pièce annulaire de fermeture est avantageusement constituée d'un anneau plat dont les bords sont fixés, de préférence par sertissage, au bord libre de la boîte ouverte et au bord correspondant de la boîte de conserve. L'anneau plat peut être en métal léger ou mince ou en matière plastique.

Quant à l'eau nécessaire à la réaction exothermique de la chaux vive, elle est avantageusement contenue dans un réceptacle hermétique en matière plastique ou en une autre matière déformable de forme annulaire, pouvant être aisément déchiré ou percé, le réceptacle contenant de l'eau étant placé au-dessus des grains de chaux.

L'emploi d'un réceptacle déformable et aisément perçable contenant de l'eau au-dessus de la masse de chaux en grains est avantageux non seulement parce qu'il permet un écoulement aisé de l'eau, par simple gravité, dans toute la masse de chaux vive en grains, lorsque ledit réceptacle a été percé, mais aussi parce que, du fait de sa déformabilité, le réceptacle vidé de son contenu permet à la masse de chaux de subir une expansion au cours de son extinction, sans risque de déformation ou de rupture de l'enveloppe ou de la boîte de conserve.

Vidé de son contenu d'eau, le réceptacle en question se recroqueville et laisse un espace disponible pour l'expansion de la masse de chaux au cours de sa réaction d'hydratation. L'utilisation d'un réceptacle à eau déformable permet aussi une mise en place aisée de ce réceptacle dans la partie supérieure de la chambre annulaire entourant la boîte de conserve.

En-dessous du récipient annulaire en matière plastique contenant de l'eau, qui la sépare de la masse de chaux vive, il est avantageux, conformément à l'invention, que cette masse de chaux vive soit séparée dudit récipient annulaire par une paroi annulaire constituée d'une mince bande ou membrane imperméable à l'eau qui est soudée aux parois interne et externe de l'enveloppe susdite par une matière formant un joint étanche avec ces parois. Cette matière est, de préférence, d'un type tel qu'elle forme un joint étanche du type thermodégradable ou thermofusible. La matière en question peut être consituée d'un polymère ayant un point de fusion compris, de préférence, entre environ 70 et 100°C, de sorte que, lorsque la membrane mince est percée ou déchirée et lorsque l'eau est admise à s'écouler dans la masse de grains de chaux vive, la chaleur engendrée par l'extinction de celle-ci provoque la fusion de cette matière. Ainsi, la chaux peut foisonner librement. Des cires micro-cristallines à bas point de fusion ou des colles du type hotmelt constituées, par exemple, d'un copolymère d'éthylène et d'acétate de vinyle peuvent être, par exemple, utilisées comme matière permettant de lier ou de souder de manière étanche la membrane annulaire mince aux parois métalliques des boîtes intérieure et extérieure dans la chambre annulaire ménagée entre ces deux boîtes.

L'enveloppe de la boîte de conserve peut être calorifugée par application d'une couche d'un matériau thermiquement isolant sur sa face externe ou sur sa face interne, cette couche facilitant la préhension de l'enveloppe et réduisant les pertes de chaleur vers l'extérieur de celle-ci.

D'autres détails du dispositif suivant l'invention ressortiront de la description suivante dans laquelle il est fait référence aux dessins schématiques ci-annexés, dans lesquels:

– la figure 1 est une coupe transversale d'une boîte autochauffante suivant l'invention;

– la figure 2 est une vue en plan dans la direction de la flèche Y à la figure 1, et

– la figure 3 est une coupe transversale partielle montrant une autre forme de réalisation de la séparation entre l'eau et les grains de chaux vive dans la chambre annulaire entourant la boîte de conserve.

Dans ces différentes figures, les mêmes notations de références désignent des références identiques.

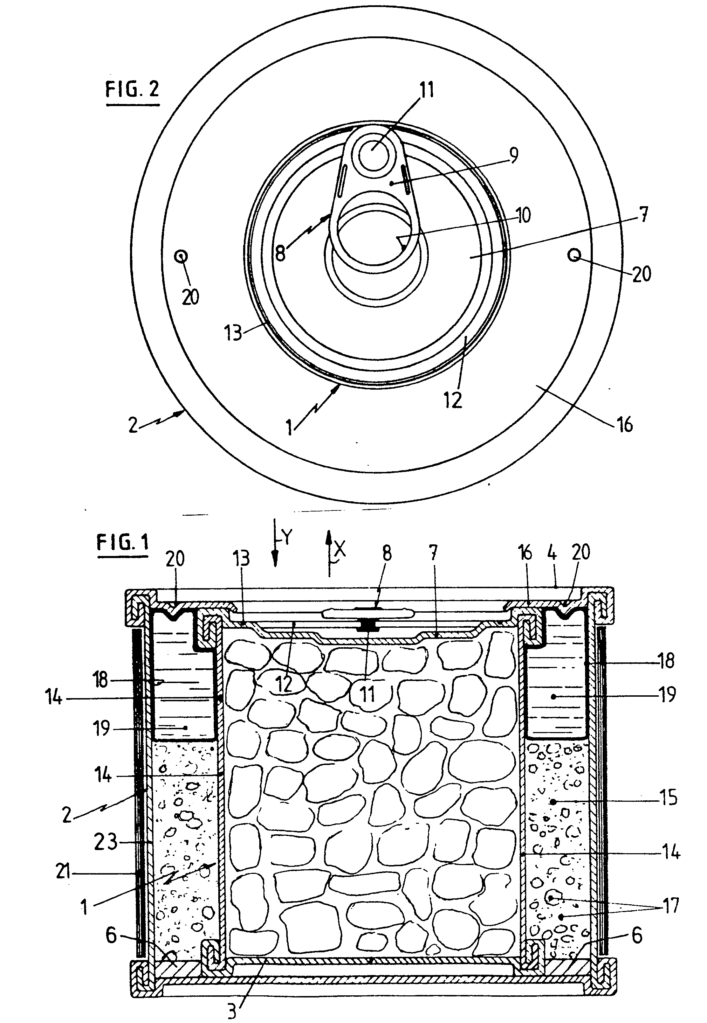

Aux figures 1 et 2, la notation de référence 1 désigne une boîte de conserve de forme cylindrique fermée de manière étanche et contenant un aliment quelconque à chauffer en vue de sa consommation. Cette boîte 1 peut contenir un aliment quelconque, tel que légume, viande, potage, etc. La boîte de conserve 1 est placée dans une enveloppe 2 ayant la forme d'une boîte cylindrique qui présente un fond fermé 3 et est ouverte à son extrémité opposée 4. L'enveloppe 2 est coaxiale à la boîte de conserve 1, dont le fond 5 est centré dans le fond 3 de la boîte extérieure 2 à l'aide d'une bague de centrage 6.

La boîte de conserve 1 est munie à son extrémité opposée 7 d'un dispositif d'ouverture connu désigné, dans son ensemble, par la notation de référence 8. Ce dispositif d'ouverture 8 comprend une languette 9 percée d'un œillet 10 et présentant une patte 11 solidaire de la paroi 12 formant ladite extrémité opposée 7. Lorsqu'on exerce une traction à la main sur la languette 9 dans le sens indiqué par la flèche X, la paroi 12 de la boîte de conserve se déchire selon une ligne circulaire de moindre résistance schématisée par la partie amincie 13 de la paroi 12.

La boîte de conserve peut être ainsi ouverte par ce dispositif connu, sans nécessiter d'instrument d'ouverture spécial, de manière à permettre la consommation du contenu de la boîte de conserve.

Entre l'enveloppe 2 et la paroi latérale 14 de la boîte de conserve est ménagée une chambre annulaire 15 qui est fermée du côté adjacent à l'extrémité 7 de la boîte de conserve 1 par une bande annulaire 16, par exemple en métal aisément perçable, qui est sertie, le long d'un bord, au bord libre (opposé à son fond fermé 3) de la boîte ouverte constituant l'enveloppe 2, tandis que cette bande annulaire 16 est également sertie, le long de son bord opposé, à l'extrémité de la paroi latérale 14 de la boîte interne 1, adjacente à son extrémité 7. Cette bande annulaire 16 assure la fermeture étanche de la chambre annulaire 15 contenant les réactifs nécessaires pour la réaction exothermique visant à chauffer la boîte de conserve 1.

Dans la chambre annulaire 15 est placée une masse de chaux vive en grains 17, dont la réactivité a été modérée par traitement thermique à une température de plus de 900°C environ. La masse de chaux vive occupe la partie inférieure de la chambre annulaire 15. Au-dessus de cette masse de chaux vive 17, la chambre annulaire 15 contient un réceptacle 18, par exemple de forme torique, contenant de l'eau 19 en excès par rapport à la quantité stoechiométriquement nécessaire pour l'extinction de la chaux vive. Le réceptacle 18 est avantageusement constitué d'une matière plastique aisément déformable, telle que, par exemple, du polyéthylène. L'eau est avantageusement contenue sous pression dans le réceptacle déformable 18, de telle sorte que, lorsque celui-ci est percé par enfoncement d'un ustensile muni d'une pointe (non montré), par exemple à travers deux endroits de faible épaisseur schématisés en 20 de la bande annulaire 16, l'eau est expulsée de ce réceptacle 18 et s'écoule rapidement par gravité dans toute la masse sous-jacente de chaux vive, avant que la réaction d'hydratation de la chaux vive puisse pratiquement commencer.

La face extérieure de l'enveloppe 2 peut être munie d'une couche thermiquement isolante 21, par exemple en polystyrène expansé.

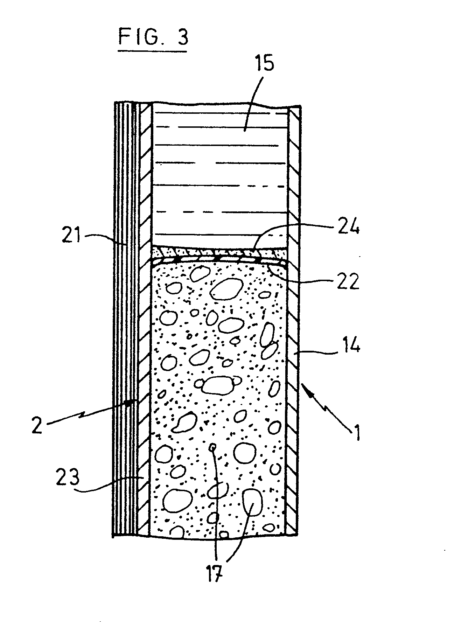

Au lieu d'utiliser un réceptacle en forme de sac annulaire 18, l'espace contenant de l'eau de la chambre annulaire 15 peut être séparé de l'espace contenant les grains de chaux vive 17 par un dispositif montré à la figure 3. Ce dispositif comprend une mince bande ou membrane annulaire plate 22 qui peut être constituée d'une matière plastique déformable, telle que du polyéthylène. Cette bande 22 est scellée à la paroi latérale 14 de la boîte intérieure 1 et à la paroi latérale 23 de l'enveloppe 2 par une couche formant un joint étanche 24. Cette couche 4 peut être obtenue en versant une petite quantité d'un polymère ou d'une cire fondue sur la bande 22 et en permettant à cette couche de durcir sur cette bande, de manière à former une couche étanche sur la bande 22. L'agent de scellement peut être, par exemple, une cire micro-cristalline ou un copolymère d'éthylène et d'acétate de vinyle ayant un point de fusion compris entre environ 70 et 100°C.

Lorsque la bande 22 et la couche 24 sont percées au moyen d'un outil, l'eau s'écoule dans la masse de grains de chaux vive 17 et, sous l'effet de la chaleur de réaction, la couche 24 fond en sorte que la bande flexible 22 n'est plus soudée, de manière étanche, aux parois latérales 14 est 23 de la boîte 1 et de l'enveloppe 2 et que le restant de l'eau peut s'écouler librement dans la masse de grains de chaux vive. Par suite de la fusion de la couche de scellement 24, la bande 22 est libérée et la chaux peut foisonner librement dans la chambre annulaire 14.

L'exemple suivant illustre l'invention de manière non limitative.

Exemple

Une boîte de conserve (1) à ouverture facile du type décrit plus haut d'une masse de 800 grammes contenant 450 grammes de saucisses et 350 grammes de liquide est placée concentriquement à l'intérieur d'une enveloppe ou boîte métallique (2), dont la face extérieure a été calorifugée au moyen d'une couche de polystyrène expansé de 3 mm d'épaisseur. La chambre annulaire (15) entre les deux boîtes (1, 2) a un volume de 450 cm$^3$. A l'intérieur de cette chambre annulaire, on a placé 200 grammes de chaux vive en grains dont la granulométrie est comprise entre 2 et 5 mm. Cette chaux a été préalablement calcinée à une température de 1200°C pendant 2 heures. Ce régime de cuisson lui confère une réactivité modérée permettant un dégagement progressif de la chaleur d'hydratation pendant 10 minutes. Dans la chambre annulaire, au-dessus de la masse de chaux, on a placé 200 cm$^3$ d'eau enfermée dans un sac (18) en matière plastique souple qui occupe la totalité du volume restant. La chambre annulaire (15) a été hermétiquement close au moyen d'une bande (16) en forme d'anneau qui a été serti entre les deux boîtes, conférant à l'ensemble une structure rigide.

La température initiale de la conserve était de 20°C. La bande annulaire (16) et le sac (18) contenant l'eau ont été percés au moyen d'une aiguille en deux points (20).

Après quelques minutes, la réaction d'extinction a débuté, échauffant la masse d'eau au contact de la chaux qui, par conduction à travers la paroi métallique de la boîte de conserve (1), a réchauffé l'aliment.

La réaction d'extinction de la chaux a été progressive et modérée. Une très faible quantité de vapeur s'est échappée par les deux orifices formés par l'aiguille dans la bande annulaire (16).

Dix minutes après le percement du couvercle annulaire, la température des saucisses était de 60°C.

Après 15 minutes, la température était de 63°C. Après 40 minutes, la température était encore de 58°C. La faible déperdition de chaleur dans le temps est due au calorifugeage extérieur de la boîte et à la masse chaude et humide de chaux hydratée qui entoure la boîte de conserve (1).

Le dispositif de chauffage d'une boîte de conserve suivant l'invention permet le chauffage à la température désirée de consommation de l'aliment y contenu de manière aisée et rapide et avec une sécurité absolue. Ceci est dû à la conception originale ainsi qu'aux matières premières bon marché entrant dans sa fabrication.

Le dispositif suivant l'invention est utilisable pour des consommateurs ayant des activités en plein air, tels que campeurs ou personnes voyageant en caravane, par chemin de fer, par voie aérienne, en bateau ou par la route (notamment routiers). Il est également utilisable par des alpinistes, par l'armée ou par des personnes ou travailleurs ayant une activité à l'extérieur, ne disposant pas de cantine ou se trouvant dans une région où il est interdit de faire du feu.

Le dispositif suivant l'invention présente de nombreux avantages pour le consommateur et pour le fabricant de boîtes.

Ainsi, les avantages suivants peuvent être cités au niveau de consommateur:

Le dispositif suivant l'invention offre la possibilité de manger ou de boire n'importe où, de façon indépendante, pratique et économique, sans nécessiter d'autre instrument qu'un ustensile de perçage et éventuellement des couverts. Il permet un chauffage rapide, en quelques minutes, de l'aliment à consommer, sans surveillance du chauffage. Grâce à l'emploi de chaux vive à réactivité modérée, ajustée à l'aliment à chauffer, aucun risque de surcuisson n'existe, tandis que l'isolation thermique de l'enveloppe permet de maintenir l'aliment chaud pendant une durée prolongée. Le dispositif suivant l'invention offre une sécurité absolue grâce à la mise en œuvre de produits non toxiques et à l'emploi de matériaux solides résistant aux chocs pouvant intervenir lors de son transport ou de sa manutention.

Au niveau du fabricant de boîtes, le système suivant l'invention offre la possibilité de satisfaire un nouveau marché en mettant à la disposition des consommateurs un système à bas prix de revient, en raison de la facilité de fabrication du système et du coût modique de l'emballage et des matières premières, notamment des matières chauffantes. Le système suivant l'invention offre également l'avantage d'une grande souplesse pour le fabricant de boîtes de conserve. Etant donné que le système de chauffage est indépendant de la boîte de conserve, le fabricant peut aisément prélever sur les chaînes de fabrication, des boîtes de conserve à équiper du système autochauffant, en fonction de la demande. La boîte de conserve munie de son enveloppe suivant l'invention peut être décorée, par exemple étiquetée, de la même manière qu'une boîte de conserve traditionnelle.

Le système suivant l'invention n'engendre aucune pollution après son utilisation. Elle peut être incinérée, broyée ou épandue, conformément aux techniques usuelles de traitement des immondices.

## Revendications

1. Dispositif permettant de chauffer un aliment contenu dans une boîte de conserve (1), comprenant ou moins une boîte de conserve entourée d'une enveloppe (2) formant une chambre annulaire (15) contenant de la chaux vive (17) et de l'eau (19) séparées par au moins une paroi (18, 22) pouvant être aisément perforée ou déchirée, pour permettre le contact entre la chaux vive et l'eau, caractérisé en ce que la chambre annulaire (15) contient de la chaux vive en grains (17) dont la réactivité a été préalablement réduite, ainsi qu'une quantité d'eau (19) supérieure à celle nécessaire pour la réaction d'hydratation de la chaux vive, cette quantité d'eau étant comprise entre 0,75 à 3 parties en poids par partie en poids de chaux vive.

2. Dispositif suivant la revendication 1, caractérisé en ce que la chambre annulaire (15) contient de la chaux vive en grains (17) dont la réactivité a été réduite par calcination à un température supérieure à environ 900°C et, de préférence, comprise entre environ 1100 et 1400°C selon le degré de réactivité souhaité.

3. Dispositif suivant l'une quelconque des revendications 1 et 2, dans lequel l'eau est contenue dans un récipient annuaire en matière plastique qui la sépare de la masse de chaux vive, caractérisé en ce que cette masse de chaux vive (17) est séparée dudit récipient annulaire (18) par une paroi annulaire (22) constituée d'une mince bande ou membrane imperméable à l'eau, qui est soudée aux parois interne (14) et externe (23) de l'enveloppe susdite (2) par une matière formant un joint étanche (24) avec ces parois.

4. Dispositif suivant la revendication 3 caractérisé en ce que la matière formant un joint étanche (24) est du type thermodégradable ou thermofusible.

5. Dispositif suivant la revendication 4, caractérisé en ce que la matière susdite a un point de fusion compris entre environ 70 et 100°C.

6. Dispositif suivant la revendication 5, caractérisé en ce que la matière susdite est une cire micro-cristalline.

7. Dispositif suivant la revendication 5, caractérisé en ce que la matière susdite est une colle du type hotmelt.

## Patentansprüche

1. Vorrichtung zum Aufwärmen eines Nahrungsmittels in einer Konservendose (1), bestehend aus mindestens einer Konservendose mit einer Ummantelung (2), die eine Ringkammer (15) bildet, welche ungelöschten Kalk (17) und Wasser (19) enthält, die durch mindestens eine Wand (18, 22) voneinander getrennt sind, die leicht lochbar oder zerreissbar ist, um den ungelöschten Kalk und das Wasser miteinander in Berührung zu bringen, dadurch gekennzeichnet, dass sich in der Ringkammer (15) körniger ungelöschter Kalk (17) befindet, dessen Reaktionsfähigkeit vorher reduziert worden ist und dass die Ringkammer (15) eine Wassermenge (19) enthält, die grösser ist als für die Hydratationsreaktion des ungelöschten Kalks erforderlich, wobei diese Wassermenge zwischen 0,75 bis 3 Gewichtsteile pro Gewichtsteil des ungelöschten Kalks umfasst.

2. Vorrichtung nach Anspruch 1, dadurch gekennzeichnet, dass die Ringkammer (15) körnigen ungelöschten Kalk (17) enthält, dessen Reaktionsfähigkeit durch Brennen bei einer Temperatur über etwa 900°C, vorzugsweise gemäss dem Grad der gewünschten Reaktionsfähigkeit zwischen etwa 1100°C und 1400°C, reduziert worden ist.

3. Vorrichtung nach einem der Ansprüche 1 und 2, bei der das Wasser in einem ringförmigen Behälter aus Kunststoff enthalten ist, der es von der Masse des ungelöschten Kalkes trennt, dadurch gekennzeichnet, dass diese Masse des ungelöschten Kalkes (17) von dem ringförmigen Behälter (18) durch eine Ringwand (22) getrennt ist, die aus einem wasserundurchlässigen dünnen Band oder einer Membran besteht, das oder die mit den Innen- (14) und Aussenwänden (23) der erwähnten Ummantelung (2) mittels eines Materials verschweisst ist, das mit diesen Wänden eine dichte Verbindung (24) bildet.

4. Vorrichtung nach Anspruch 3, dadurch gekennzeichnet, dass das eine dichte Verbindung (24) bildende Material in Wärme abbaubar ist oder in Wärme schmilzt.

5. Vorrichtung nach Anspruch 4, dadurch gekennzeichnet, dass der Schmelzpunkt des erwähnten Materials zwischen etwa 70°C und 100°C liegt.

6. Vorrichtung nach Anspruch 5, dadurch gekennzeichnet, dass das erwähnte Material ein mikrokristallines Wachs ist.

7. Vorrichtung nach Anspruch 5, dadurch gekennzeichnet, dass das erwähnte Material ein heissschmelzender Kleber ist.

## Claims

1. Device for heating a food contained in a tin (1), comprising at least a tin surrounded by an envelope (2) forming an annular chamber (15) containing quicklime (17) and water (19) separated by at least one wall (18, 22) which can be easily perforated or treared, so as to allow the contact between the quicklime and the water, characterized in that the annular chamber (15) contains grains of quicklime (17), the reactivity of which has been previously reduced, as well as an amount of water (19) which is larger than the amount necessary for the hydration reaction of the quicklime, said amount of water being comprised between 0,75 and 3 parts by weight for 1 part by weight of quicklime.

2. Device according to claim 1, characterized in that the annular chamber (15) containing quicklime grains (17), the reactivity of which has been reduced by calcination at a temperature of more than about 900°C and, preferably, comprised between about 1100 and 1400°C according to the desired reactivity.

3. Device according to anayone of claims 1 and 2 in which the water is contained in an annular container made of plastic material which separates it from the quicklime mass (17), characterized in that said annular chamber (18) by an annular wall (22) consisting of a tin waterproof strip or membrane which is sealed to the inner (14) and outer walls of said envelope (2) by a material forming a waterproof barrier (24) with said walls.

4. Device according to claim 3, characterized in that the material forming a waterproof barrier (24) is of a thermodegredable or thermofusing type.

5. Device according to claim 4, characterized in that said material has a melting point comprised between 70 and 100°C.

6. Device according to claim 5, characterized in that said material is a microcrystalline wax.

7. Device according to claim 5, characterized in that said material is an adhesive of the hotmelt type.

0082834

FIG. 2

FIG. 1

7

## FIG. 3